# EUROPEAN PATENT APPLICATION

(11) **EP 4 792 644 A1**
(43) Date of publication of application: **19.08.2026**
(21) Application number: 26151667.8
(22) Date of filing: 13.01.2026
(51) Int. Cl.: A01K 1/01, A01K 1/015

(54) **LIVESTOCK SHED EQUIPPED WITH A SLATTED FLOOR AND A MANURE DISCHARGE DEVICE LOCATED UNDERNEATH IT**

(30) Priority: 17.02.2025 NL 2039786; 02.05.2025 BE 202505286
(71) Applicant: Peelfarm Holding BV, 5712 TD Someren (NL)
(72) Inventor: DIRVEN, Bennaar, 5712 TD Someren (NL)
(74) Representative: Verhees, Godefridus Josephus Maria

(57) **Abstract**

Livestock shed (1) comprising a slatted floor (5) and a manure discharge device (7) located underneath it, comprising a tubular manure discharge chute (9) with a round cross-section and an opening (11) extending lengthwise in the top of the manure discharge chute, the manure discharge device (7) is provided on either side of the manure discharge chute (9) with a manure guide surface (13) sloping downwards towards the manure discharge chute and a spiral screw conveyor (15) located in the manure discharge chute (9), which screw conveyor (15) is rotated about the centerline (19) by drive means (17) during operation. The core of the screw conveyor (15) is open and the inner edge (15a) of the spiral of the screw conveyor (15) is free.

## Description

### Technical field of the invention

The invention relates to a livestock shed, in particular a pig housing, comprising a slatted floor and a manure discharge device located underneath it, comprising a tubular manure discharge chute with a round cross-section and an opening extending lengthwise in the top of the manure discharge chute, the manure discharge device is provided on either side of the manure discharge chute with a manure guide surface sloping downwards towards the manure discharge chute and a spiral screw conveyor located in the manure discharge chute, which screw conveyor is rotated about the centerline by drive means during operation

Strict requirements are imposed on livestock sheds regarding maximum emissions of harmful gases. The most important factor for reducing emissions is reducing the emitting surface. In addition, frequent removal of manure from the livestock shed to a closed storage facility outside the shed is an important factor in reducing emissions. If manure remains in the livestock shed for an extended period, a large amount of methane is produced, which is a potent greenhouse gas.

### Background of the invention

A livestock shed equipped with a manure discharge device according to the preamble of claim 1 is known from EP 0 252 292 A2. In this known manure discharge device, the inner edge of the screw conveyor's spiral is attached to a shaft or a tube.

### Summary of the invention

An object of the invention is to provide a livestock shed of the type mentioned in the preamble, equipped with a manure discharge device, whereby manure discharge is more efficient and the manure discharge device is more reliable than in the known livestock shed. To this end, the livestock shed according to the invention is characterized in that the core of the screw conveyor is open and the inner edge of the screw conveyor's spiral is free. Such a screw conveyor is also referred to as an "open-shaft screw auger". This reduces the risk of overloading or jamming of the screw conveyor. Excess manure remains in the core of the screw conveyor without being displaced, reducing the power required to move the manure.

An embodiment of the livestock shed according to the invention is characterized by the screw conveyor being positioned freely in the manure discharge chute. No bearings are required for the screw conveyor, eliminating problems such as jamming or bearing wear. Moreover, transporting manure using a screw conveyor requires less power than using a piston, which creates more friction and therefore requires more energy.

A further embodiment of the livestock shed according to the invention is characterized in that the livestock shed is provided with an outer wall having at least one hole to which the manure discharge chute is connected and through which the screw conveyor protrudes, which livestock shed is further provided with a manure pit located on the outside of the outer wall at the location of the hole, the drive means being located on the outside of the outer wall on the side of the m facing away from the outer wall of the manure pit and the part of the screw conveyor located outside the livestock shed are positioned freely above the manure pit and are connected at their end to the drive means. This allows the manure to fall unhindered into the manure pit, eliminating the need for the drive means to provide additional force to remove the manure from the screw conveyor. The drive means are, for example, an electric motor. For replacement or repair, the drive means are easily accessible because they are located in an easily accessible location outside the livestock shed. The screw conveyors can also be easily pulled out of the manure discharge chute through the holes in the outer wall, allowing for easy replacement or repair.

### Brief description of the drawings

The invention will be explained in more detail below using exemplary embodiments of the livestock shed according to the invention, shown in the drawings. In the drawings:
Figure 1 shows the livestock shed in longitudinal section;
Figure 2 shows a detail of the manure discharge chute with sloping manure guide surfaces and screw conveyor;
Figure 3 shows a perspective view of part of the livestock shed shown in Figure 1;
Figure 4 shows the left manure discharge chutes of the part of the manure shed shown in Figure 3; and
Figure 5 shows a cross-section of part of the livestock shed.

### Detailed description of the drawings

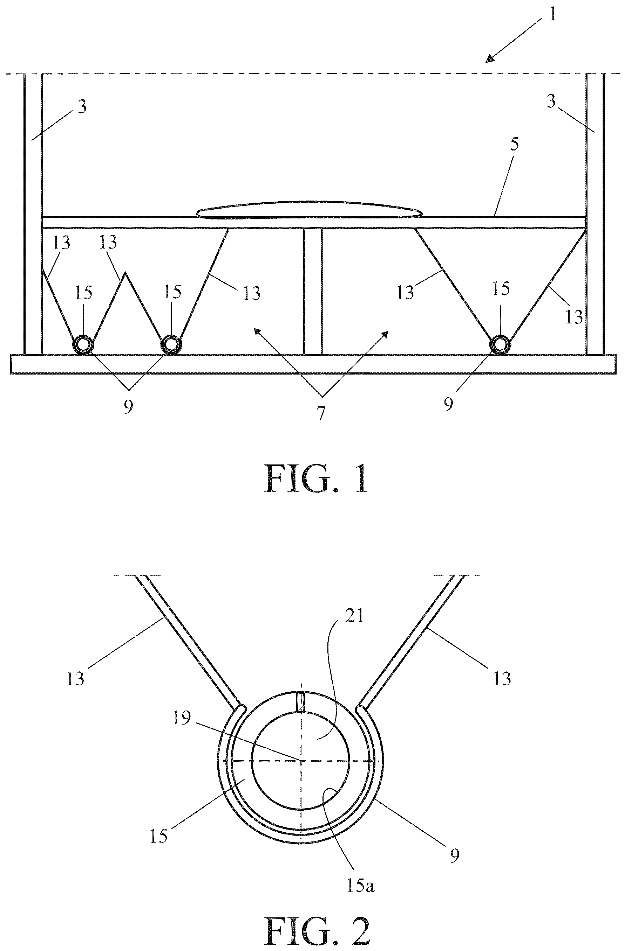

Figure 1 shows a longitudinal section of an embodiment of the livestock shed according to the invention. The livestock shed 1 is equipped with exterior walls 3, a slatted floor 5, and a manure discharge device 7 located beneath the slatted floor. This manure discharge device has a number of tubular manure discharge chutes 9 with a round cross-section. On the upper side, the manure discharge chutes 9 are equipped with an opening 11 extending lengthwise from the manure discharge chute.

The manure discharge device 7 also has manure guide surfaces 13 sloping downwards towards the manure discharge chutes, which are located on either side of the manure discharge chutes 9. The manure discharge chutes 9 and the manure guide surfaces 13 are attached to each other and are made of plastic.

Helical conveyor screws 15 are located in the manure discharge chutes 9, which function as manure discharge elements for the manure present in the manure discharge chute 9. These conveyor screws 15 are made of stainless steel.

Figure 2 shows an enlarged view of one of the manure discharge chutes 9 with the sloping manure guide surfaces 13 and one of the conveyor screws 15. The core 21 of the conveyor screw 15 is open, and the inner edge 15a of the spiral of the conveyor screw is free, thus minimizing the risk of overload.

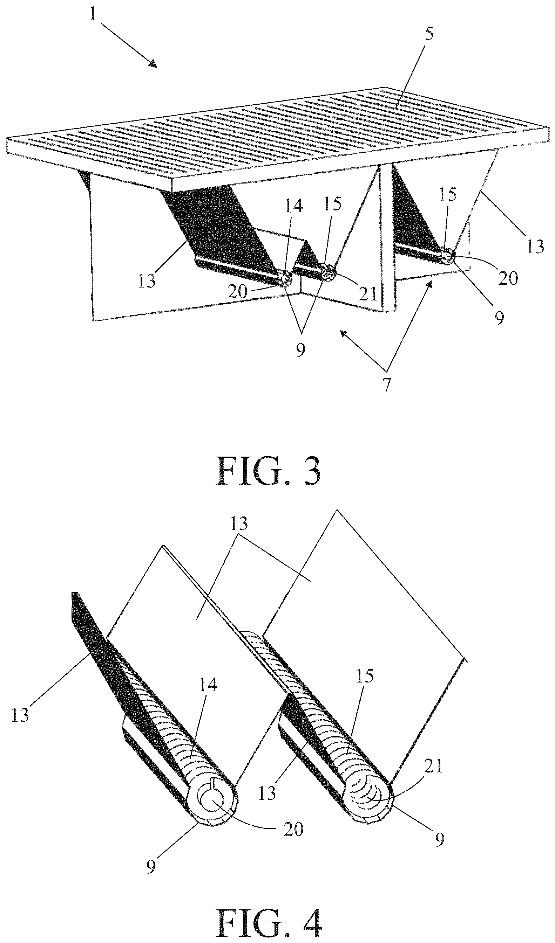

For clarification, Figure 3 shows a perspective view of part of the livestock shed shown in Figure 1. The left-hand manure guide surfaces 13 and manure discharge chutes 9 are equipped with, respectively, a screw conveyor 14 with a solid core 20 (leftmost conveyor groove), which is not part of the livestock shed according to the invention, and a screw conveyor 15 with an open core 21, which is part of the livestock shed according to the invention. Figure 4 shows an enlarged view of both left-hand manure guide surfaces 13 and manure discharge chutes 9, containing the screw conveyors 15.

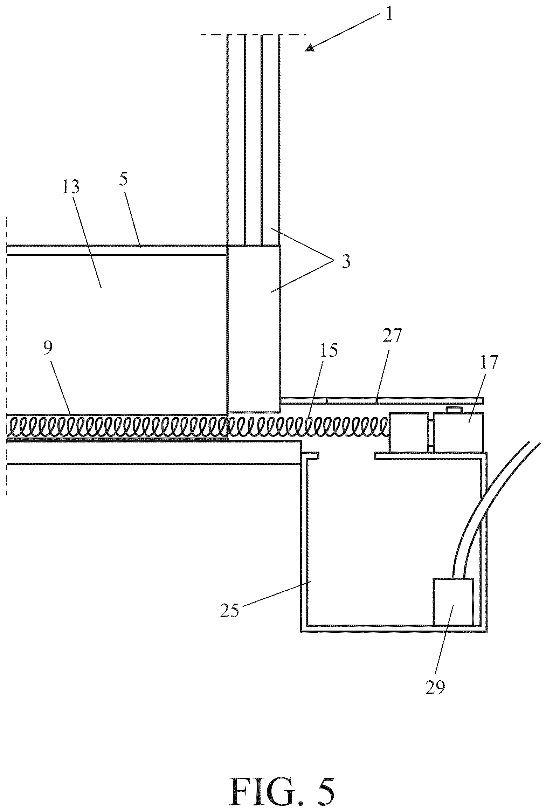

Figure 5 shows a cross-section of part of the livestock shed 1. The screw conveyors 15 are positioned freely in the manure discharge chutes 9 and are connected at one end to drive means 17, which in this embodiment are formed by electric motors with associated transmissions. By rotating the helical screw conveyors 15 about the centerline 19, the manure is transported outward. In the outer wall 3 of the livestock shed 1, there are holes 23 to which the manure discharge chutes 9 are connected. The screw conveyors 15 extend through these holes 23.

Next to the outer side of the outer wall 3 is a manure pit 25 that extends lengthwise of the livestock shed. The drive means 17 are located on the side of the manure pit 25 facing away from the outer wall. The part of the screw conveyor 15 located outside the shed is positioned freely above the manure pit 25 and is connected at its end to the drive means 17. The manure coming from the manure discharge chutes 9 falls directly into the manure pit 25, which is closed at the top by a cover 27. The manure pit 25 can be emptied by a pump 29 located therein. Inside the shed, under the slatted floor 5, there is no technical equipment, only the manure discharge chutes 9 with the screw conveyors 15 located therein.

A larger diameter main screw conveyor can also be installed in a recessed position next to the outer wall. The screw conveyors then converge on this main screw conveyor. The recessed manure pit is then located at the end of the main screw conveyor. The liquid manure is then kept relatively cool in the manure pit, from which it can be regularly discharged.

Although the invention has been explained above with reference to the drawings, it should be noted that the invention is by no means limited to the embodiments shown in the drawings. The invention also extends to all embodiments deviating from the embodiments shown in the drawings, within the scope defined by the claims.

## Claims

1. Livestock shed (1), in particular a pig housing, comprising a slatted floor (5) and a manure discharge device (7) located underneath it, comprising a tubular manure discharge chute (9) with a round cross-section and an opening (11) extending lengthwise in the top of the manure discharge chute, the manure discharge device (7) is provided on either side of the manure discharge chute (9) with a manure guide surface (13) sloping downwards towards the manure discharge chute and a spiral screw conveyor (15) located in the manure discharge chute (9), which screw conveyor (15) is rotated about the centerline (19) by drive means (17) during operation, **characterized in that** the core (21) of the screw conveyor (15) is open and the inner edge (15a) of the spiral of the screw conveyor (15) is free.

2. Livestock shed according to claim 1, **characterized in that** the screw conveyor (15) is positioned freely in the manure discharge chute (9).

3. Livestock shed according to claim 1 or 2, **characterized in that** the livestock shed (1) is provided with an outer wall (3) having at least one hole (23) to which the manure discharge chute (9) is connected and through which the screw conveyor (15) protrudes, which livestock shed is further provided with a manure pit (25) located on the outside of the outer wall (3) at the location of the hole (23), the drive means (17) being located on the outside of the outer wall (3) on the side of the manure pit (25) facing away from the outer wall (3) and the part of the screw conveyor (15) located outside the livestock shed are positioned freely above the manure pit (25) and are connected at their end to the drive means (17).
